# EUROPEAN PATENT APPLICATION

(11) **EP 1 804 158 A1**
(43) Date of publication of application: **04.07.2007**
(21) Application number: 06270001.8
(22) Date of filing: 03.01.2006
(51) Int. Cl.: G06F 3/147, G09G 5/14, G06F 17/30

(54) **Situated display system**

(71) Applicant: Microsoft Corporation, Redmond WA 98052 (US)
(72) Inventor: Harper, Richard Microsoft Research Ltd., Cambridge Cambridgeshire CB3 0FB (GB); Izadi, Shahram Microsoft Research Ltd., Cambridge Cambridgeshire CB3 0FB (GB)
(74) Representative: Free, Rachel Alder

(57) **Abstract**

Situated displays, being automated displays embedded in an environment exist in many forms today. For example, electronic displays for advertisements fixed to the outsides of buildings, electronic ticker displays such as those fixed to bus stops and digital image displays used at nightclubs. We have found from empirical research a need for remote users to specify which display screen regions will be used for particular content items. By dividing the display up into regions that are uniquely addressable a remote user is able to direct content to particular regions. The remote user operates any suitable communications device to achieve this such as a mobile phone, or PDA. A web service or other means is provided to give access to a scheduling system for reserving display regions which are preferably associated with prices. Advantageously, the situated display is controlled by a processor with reduced functionality such that its size and cost is reduced.

## Description

### TECHNICAL FIELD

This description relates generally to display systems and more specifically to situated display systems being those having an automated display embedded in an environment.

### BACKGROUND

Situated displays, being automated displays embedded in an environment exist in many forms today. For example, electronic displays for advertisements fixed to the outsides of buildings in prominent places, electronic ticker displays such as those fixed to bus stops and other public transport infrastructure such as rail stations, underground trains and the like, and digital image displays used at nightclubs and in auditoria and concert venues. In contrast, non-situated displays such as screens associated with personal computers, laptops, mobile phones and the like are not "situated" because these are not considered as being embedded in a particular environment. That is, a given personal computer screen is not associated with or fixed to a particular physical location; it can be moved. Also, a personal computer screen can be shared by different users operating the PC at different times. The screen itself is then not permanently associated with, say, "John's office" because sometimes Jane may use it as well. However, an electronic ticker display at a bus stop is fixed to that particular bus stop and is permanently associated with that bus stop. A situated display can be fixed to a movable item, such as a car or underground train however. In that case it is permanently associated with the car or underground train concerned. Thus the term "situated display" is used herein to refer to a display which is physically fixed to and permanently associated with a particular physical location, be that location a geographical location, or a site on another object. In addition, non-situated displays such as PC screens and mobile phone screens are primarily user interface displays; that is, they are intended to provide a display of information about what the PC or the mobile is doing. They can be considered as a mechanism for and/or a channel through which interaction with the PC or mobile can be done. In contrast, a situated display is designed primarily for the display of content generated by entities elsewhere. The information displayed is the key value provided and not the ability to interact with the Personal or Mobile Computer. Thus the term "situated display" is used herein to refer to a display for information where that information is independent of a local control means for controlling the situated display. In addition, the situated display is physically fixed to and permanently associated with a particular physical location as mentioned above.

It is known to use situated electronic ticker displays together with text messaging whereby a text message can be sent from a mobile phone (remote of the ticker display itself) to a display service, which then displays the message on the ticker display. The text information is presented serially.

It is also known to display text information on situated displays in nightclubs. Text messages sent from a mobile phone (remote of the display itself) are sent to a display service. The text message is filtered (manually by an operative) to remove unsuitable content and then manually sent to the display for presentation. The sender of the text message has no control over any choice of display screen location to be used and/or display preferences such as colour or size.

There is a need to improve the manner in which such situated displays can be used to display information which is simple and effective to operate.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

In an example a situated display system is provided. It comprises a situated display being an automated display permanently associated with a physical location. For example, this could be a digital display board at a traffic junction, an electronic display in a domestic environment such as a home kitchen, an electronic display board fixed inside an underground train carriage, or an electronic display in a nightclub or auditorium. The display has a plurality of regions each with a unique address. For example, the unique addresses can be provided by subscriber identity modules (SIMs), internet protocol addresses, email addresses, conventional telephone numbers, or any other suitable type of address. The regions themselves can be of any suitable form. For example, predetermined bundles of pixels in the form of user recognizable shapes such as squares, oblongs, or other shapes.

The situated display system also has content receiving means arranged to receive content items and associated content display preference information comprising at least one of the unique addresses. For example, the content items can be images, sound files, movie clips, text messages or any other suitable type of content. The content is preferably sent from a remote entity such as a user with a mobile phone or other suitable communications device. As well as this, control means are provided for controlling the display. The control means is integrated with or directly connected to the display and is arranged to display the received content items on the display on the basis of the content display preference information. For example, the control means is a processor which renders received content onto the display regions for which unique addresses are provided in the content display preference information. That preference information can also comprise colour information, style information, font type information and any other preferences as to how the content is to be presented.

By dividing the display up into regions that are uniquely addressable it is possible for a remote user to specify exactly which display region will be used for the sent content. We have unexpectedly found using empirical research that there is a particular need for users to be able to do this where situated displays are used. Our research discovered that, in certain instances, users desire monopoly control over screen collateral so as to ensure that the content they have created is displayed and viewed in predeterminable ways. The value of this is sufficient that users are willing to pay for these rights. The advantages users seek are twofold. First, it means that users can design their content in a fashion suited for the display in question and can be assured that it is displayed in the sought for manner; and second, they can be sure that their own content is not violated by the display of other content on the same screen area or collateral. These needs were discovered in examination of the use of situated displays in home and work settings, where it became clear that the 'paper display' analogues were in newspaper adverts, shop noticeboards, and, in domestic settings, family noticeboards.

In another example, a method of operating a situated display system is provided. The situated display is an automated display permanently associated with a physical location and it has a plurality of regions each with a unique address. The method comprises the steps of:
- receiving content items and associated content display preference information comprising at least one of the unique addresses; and
- displaying at least some of the received content items on the display region associated with the at least one received unique address and on the basis of the content display preference information.

As mentioned above, previously the display of information on situated displays has been primarily serial. Also, previously the content has been in the control of the local device operating system or control means. Our invention enhances the utility of situated display collateral by making that collateral available using a scaleable architecture. Areas or zones of the display are made available to content providers in terms of units of size and time. The value is further enhanced by enabling content providers to determine the format, colouring, layout etc of their content for any selected spatial or temporal zone (rather than being in the control of a local operating system). In this way situated displays can provide "monetisable" channels for third party content.

Preferably the control means is further arranged to repeatedly update the display on the basis of received content display preference information.

Preferably the unique addresses are of a type selected from subscriber identity modules (SIMs), internet protocol (IP) addresses, email addresses, uniform resource indicators (URls) and uniform resource locators (URLs).

Preferably the functionality of the control means is substantially limited to displaying and updating content on the display on the basis of the content display preference information. This provides the advantage that the control means integrated or local to the display can be low cost, small in size, easy to maintain and with reduced need for upgrades.

In an example, the display comprises one or more loudspeakers each with an associated address and wherein the control means is also arranged to control the loudspeakers to display content.

Preferably each of the display regions is associated with a price.

Advantageously, the content display preference information also comprises any of colour information, style information, font type information and volume information. This enables a remote sender of content to specify preferences not only for the display location to be used for that content, but also as to other aspects of the manner of presentation of that content.

Preferably the system further comprises a scheduling system comprising information about the display regions and their unique addresses and arranged to schedule use of those display regions for presentation of content. This enables users to book or reserve display regions via the scheduling system. For example, the scheduling system can be provided as part of a web service for the situated display. Advantageously, the scheduling system has information about prices associated with the display regions. It can comprise a pricing module for dynamically determining prices for the display regions on the basis of demand for those regions.

In another example the situated display system further comprises a transaction database arranged to record information about use of the display regions on the situated display. This can be used for billing purposes as well as to provide historical information for forecasting and price determination.

In an example a computer program is provided comprising computer program code means adapted to perform all the steps of the methods described above. The computer program can be embodied on a computer readable medium.

The method described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a situated display system;
FIG. 2 is a flow diagram of a method of sending content to a situated display;
FIG. 3 is a flow diagram of a method carried out by a remote user;
FIG. 4 is a flow diagram of a method of operating the scheduling system of FIG.1.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

Although the present examples are described and illustrated herein as being implemented in a situated display system accessed by a web-based service, the system described is provided as an example and not a limitation. As those skilled in the art will appreciate, the present examples are suitable for application in a variety of different types of situated display systems.

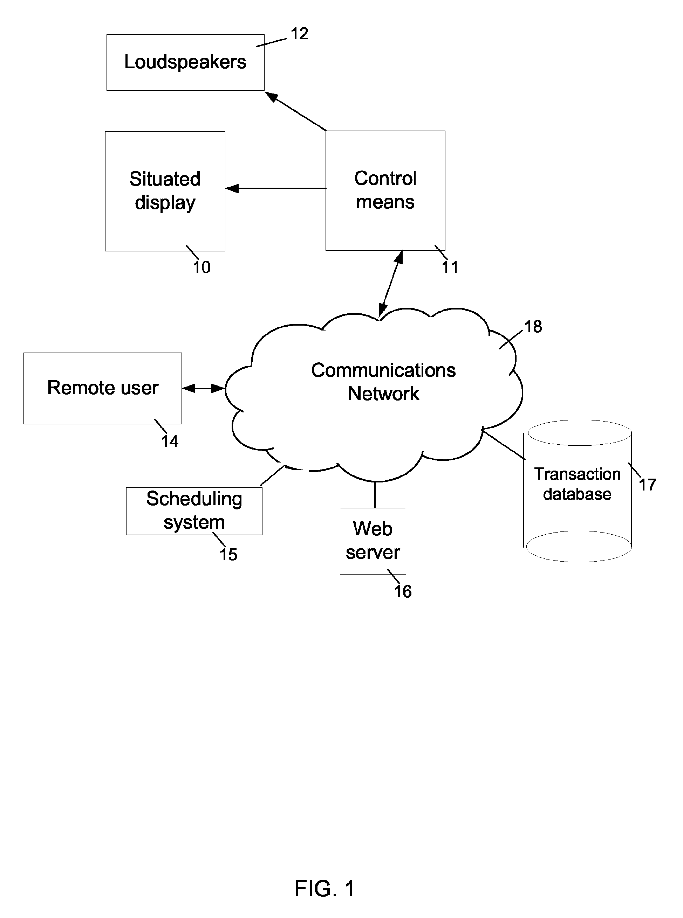

FIG. 1 is a schematic diagram of a situated display system. A situated display 10 is provided in any suitable form. For example a digital display screen or any other type of electronic display. The display could also comprise a projector or other means projecting onto any suitable surface such as a wall, ceiling or floor. The display is divided into a plurality of regions each with a unique address. For example, the display screen, board or surface is divided into a grid or other contiguous regions and each region is associated with a unique address. The regions are of any suitable form. For example, these are superordinate arrangements of pixels. Predetermined bundles of pixels, in the form of squares, oblongs or other shapes are each associated with their own unique address. The unique addresses are of any suitable type such as subscriber identity modules (SIMs), IP addresses, URls, URLs, email addresses, conventional telephone addresses, global positioning system co-ordinates or other addresses. The display optionally has one or more loudspeakers 12 associated with it. For example, there can be one loudspeaker per display region or only particular ones of the display regions may have associated loudspeakers.

A control means 11 for controlling the display and optionally also the loudspeakers 12 is provided. In a preferred example the control means is integrated with or local to the situated display 10. This control means has the ability to receive content items for display, to render those content items to particular display regions depending on unique addresses provided, control the loudspeakers 12 (if applicable), and to repeatedly update the display regions on the basis of display preference information received. For example, the control means is a personal computer or other processor that also provides other functionality. However, in a preferred embodiment the functionality of the control means 11 is limited as described above. This enables the size of the control means to be reduced as well as its cost, need for maintenance and upgrade. This is particularly advantageous for situated displays in remote locations such as at traffic junctions, on public transport infrastructure and also in domestic environments.

The control means 11 is connected to a communications network 18 of any suitable type and a remote user 14 has access to the situated display system via that communications network 18. For example, the remote user is an individual with a mobile communications device, or any other suitable type of communications device. The remote user 14 can also be an automated service.

Information about the unique addresses of the display regions and/or loudspeakers is available over the communications network 18. This can be provided by the control means 1 1 or any other suitable database accessible via the communications network 18. In a preferred example the address information is provided by a scheduling system 15. This scheduling system can be used by the remote user 14 either directly or via a web service provided using a web server 16. The scheduling system allows the remote user to obtain information about availability of display screen regions, display options available at those regions (for example, what colours are available, whether loudspeakers are available) and optionally also information about content already or planned to be displayed concurrently at other display regions. In a particularly preferred embodiment the scheduling system also provides pricing information about prices of display regions for particular time periods. Using the scheduling system the remote user 14 is able to book, or purchase display region time. Optionally, the scheduling system 15 also comprises a pricing module arranged to dynamically determine prices for display regions on the basis of demand for those regions.

In an example the situated display system also comprises a transaction database 17. This receives and stores information about display events where content is displayed on particular regions. This information can comprise for example, information about prices paid for display, information about the type of content, information about the remote user concerned and information about the display event itself. This would include for example, a duration of display, the identity of the display regions used, the time of day the display occurred, the use or not of loudspeakers, the use or not of colour preferences and other factors. The transaction database can then be used for billing purposes, for forecasting, for price determination, or for any other suitable purpose.

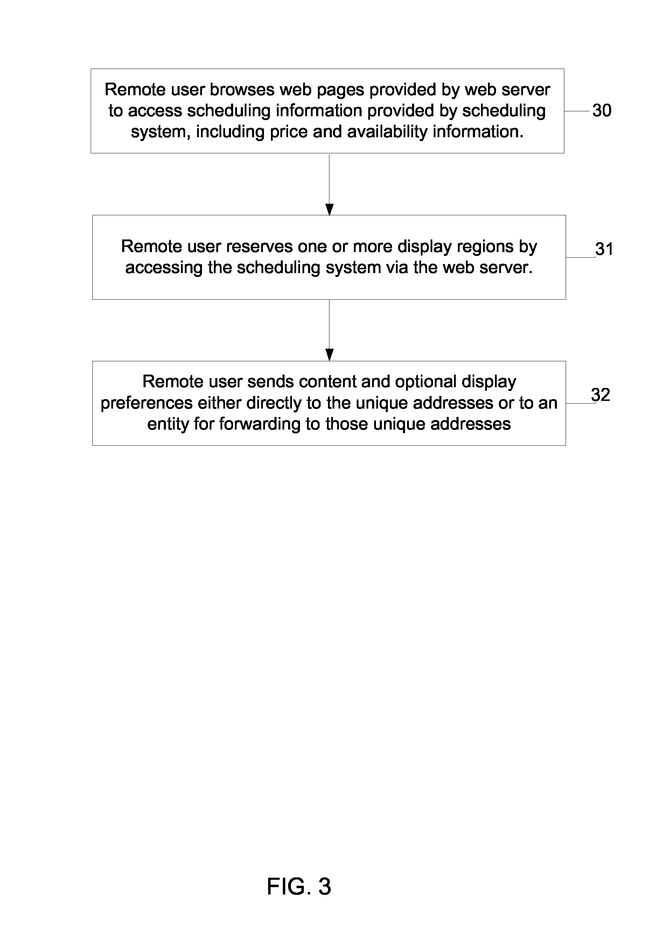

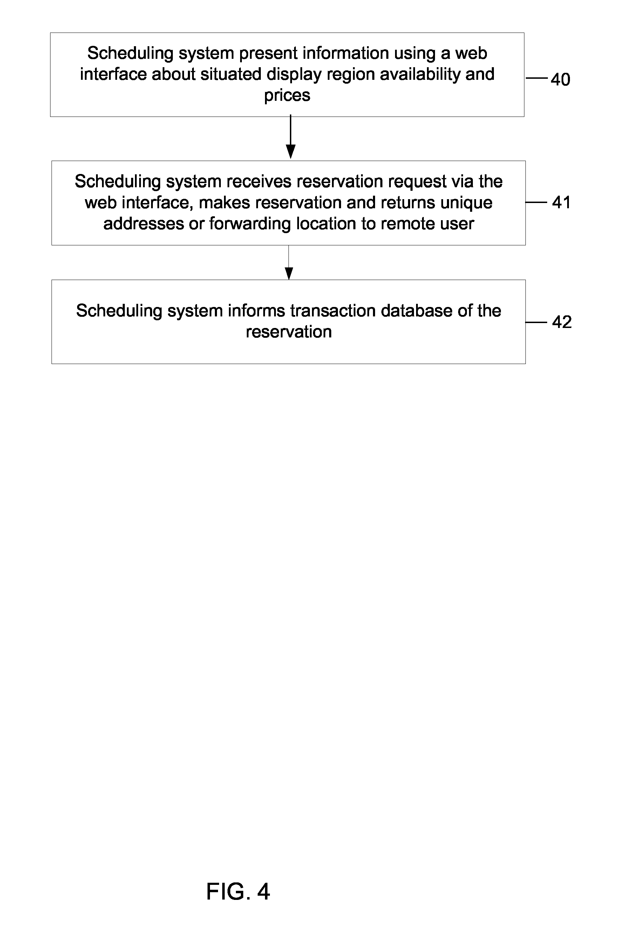

In a preferred example the situated display service is provided in the form of a web service using a web server 16. Web pages are presented which enable the remote user 14 to interact with the scheduling system to request and book display regions. Use of the web-service is explained in more detail below with reference to FIGs. 3 and 4.

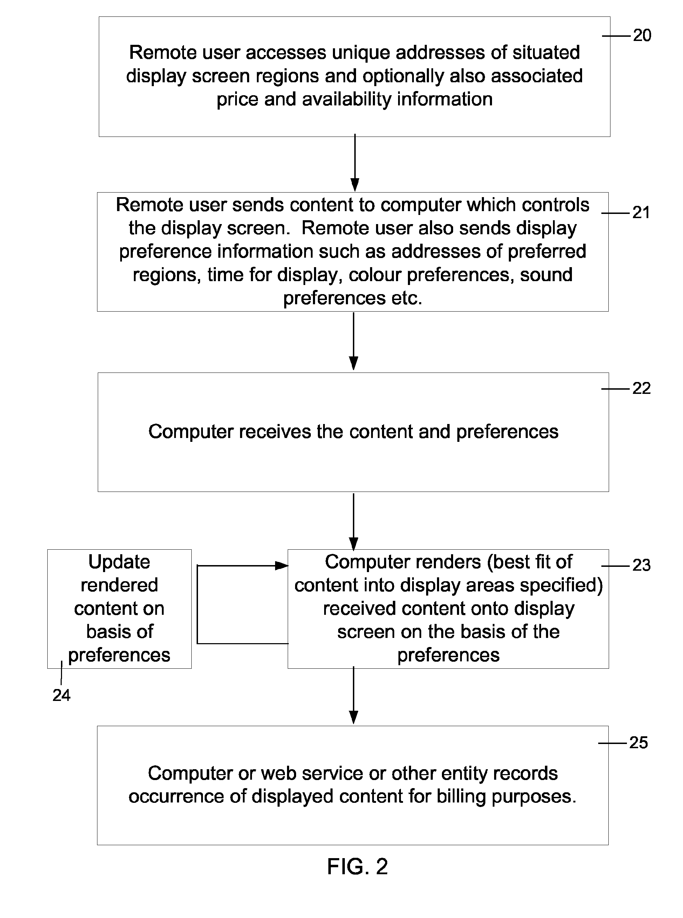

FIG. 2 is a flow diagram of a method of using a situated display system and of operation of that situated display system. A remote user (14 in FIG. 1) accesses information about situated display regions in any suitable manner. For example, using a web service as described in more detail later, by accessing the information from any suitable database linked to the communications network 18, or by using pre-specified information. For example the information comprises price and availability information for display screen regions and information about what types of display are available, such as loudspeakers, colour options, etc. (see box 20 of FIG. 2).

The remote user 14 collates and sends content items for display on the situated display. The content items can be of any suitable form such as image files, text files, sound files, text messages, email messages, MMS messages, or other. The content items are either sent directly to a control means 1 1 controlling the display 10 or to a forwarding entity arranged to forward the content items to the control means 11. In one embodiment the remote user obtains the unique addresses of the display regions. The remote user is then able to use those unique addresses to send content directly to the display regions. In that case, the control means 1 1 comprises policing functionality to ensure that only display regions that have been appropriately booked and paid for can be used and optionally also automatic filtering means to check that the content items are appropriate for display. In another embodiment, the remote user 14 does not have access to the unique addresses but rather sends the content items for display via a forwarding entity. This enables the unique addresses to be hidden from the remote user to prevent inappropriate use of those addresses.

In the case that the remote user 14 has access to the unique addresses that remote user is able to send content to the control means 11 together with any display preference information such as times for display, colour preferences, sound preferences etc. (see box 21 of FIG. 2). The control means 1 1 receives the content items and preferences (see box 22 of FIG. 2) and renders that content onto the display screen on the basis of the preferences (box 23 of FIG. 2). A best fit is made of the content into the display region(s) specified by the unique addresses and using any colour, style or other preferences indicated. The control means 1 1 repeatedly updates the rendered content on the basis of the preferences (see box 24 of FIG. 2). For example, if a display region has been reserved for a time period of one hour the display is updated to remove content items from the region after that time. The control means 1 1 or other entity records the occurrence of the displayed content for billing or other purposes (see box 25 of FIG. 2).

FIG. 3 is a flow diagram of a method carried out by a remote user 14. The remote user 14 browses web pages provided by a web server 16 (in FIG. 1) to access scheduling information provided by a scheduling system 15, including price and availability information (see box 30 of FIG. 3). The scheduling system preferably provides a web-based user interface that enables the remote user to easily view this information and to reserve one or more display regions (see box 31 of FIG. 3). The remote user then sends the content and optional display preferences either directly to the unique addresses concerned or to an entity for forwarding to those unique addresses (see box 32 of FIG. 3). The entity for forwarding can be any suitable type of re-direction server, the scheduling system, the web server 16, the transaction database 17 or other communications network node.

FIG. 4 is a flow diagram of a method of operating the scheduling system 1 5 of FIG. 1. This scheduling system 1 5 presents information using a web interface about situated display region availability and prices (see box 40 of FIG. 4). The scheduling system receives a reservation request via the web interface, makes a reservation and returns unique addresses or forwarding location information to the remote user 14 (see box 41 of FIG. 4). The scheduling system 1 5 then informs the transaction database of the reservation (see box 42 of FIG. 4).

In the examples discussed above the loudspeakers are just one example of multimedia collateral or resource that can be monetized in the same fashion as for display regions. Any other type of multimedia resource can be used. Whereas display screens can be used to display content concurrently in different display screen regions (the screen can be a visual multichannel) this is not practical for sound. Sound is preferably provided in a serial basis whereby only one sound is played at a time. This avoids concurrent playing of sounds which would create sound contagion. The transaction database is preferably arranged to take into account serial display of sounds as compared to concurrent display of visual content.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A situated display system comprising:
(i) a situated display (10) being an automated display permanently associated with a physical location; said display comprising a plurality of regions each with a unique address;
(ii) content receiving means arranged to receive content items and associated content display preference information comprising at least one of the unique addresses;
(iii) control means (11) for controlling the display, the control means being integrated with or directly connected to the display (10) and arranged to display the received content items on the display on the basis of the content display preference information.

2. A situated display system as claimed in claim 1 wherein the control means (11) is further arranged to repeatedly update the display on the basis of received content display preference information.

3. A situated display system as claimed in claim 1 or claim 2 wherein the unique addresses are of a type selected from subscriber identity modules (SIMs), internet protocol (IP) addresses, email addresses, uniform resource indicators (URIs) and uniform resource locators (URLs).

4. A situated display system as claimed in any preceding claim wherein the functionality of the control means (11) is substantially limited to displaying and updating content on the display on the basis of the content display preference information.

5. A situated display system as claimed in any preceding claim wherein the display comprises one or more loudspeakers (12) each with an associated address and wherein the control means is also arranged to control the loudspeakers to display content.

6. A situated display system as claimed in any preceding claim wherein each of the display regions is associated with a price.

7. A situated display system as claimed in any preceding claim wherein the content display preference information also comprises any of colour information, style information, font type information and volume information.

8. A situated display system as claimed in any preceding claim which further comprises a scheduling system (1 5) comprising information about the display regions and their unique addresses and arranged to schedule use of those display regions for presentation of content.

9. A situated display system as claimed in claim 8 wherein the scheduling system is provided in the form of a web service in communication with the situated display control means.

10. A situated display system as claimed in claim 8 or claim 9 wherein the scheduling system comprises information about prices associated with the display regions.

11. A situated display system as claimed in claim 10 wherein the scheduling system comprises a price determining module for dynamically determine a price for one or more of the display regions on the basis of demand for those display regions.

12. A situated display system as claimed in any preceding claim which further comprises a transaction database (1 7) arranged to record information about use of the display regions on the situated display.

13. A method of operating a situated display system comprising a situated display (10) being an automated display permanently associated with a physical location; said display comprising a plurality of regions each with a unique address; said method comprising the steps of:
(i) receiving content items and associated content display preference information comprising at least one of the unique addresses;
(iii) displaying at least some of the received content items on the display region associated with the at least one received unique address and on the basis of the content display preference information.

14. A method as claimed in claim 13 wherein the content items are received from a sending entity (14) remote of the display.

15. A method as claimed in any of claims 13 or 14 which comprises substantially limiting functionality local to the display to that of displaying and updating content on the display on the basis of the content display preference information.

16. A method as claimed in any of claims 13 to 1 5 comprising displaying at least some of the content using loudspeakers (12).

17. A method as claimed in any of claims 13 to 16 which comprises associating each of the display regions with a price.

18. A method as claimed in any of claims 1 3 to 17 which further comprises using a scheduling system (1 5) comprising information about the display regions and their unique addresses to schedule use of those display regions for presentation of content.

19. A method as claimed in claim 18 which comprises dynamically determining a price for one or more of the display regions on the basis of demand for those display regions.

20. A computer program comprising computer program code means adapted to perform all the steps of any of claims 1 3 to 19.
